# EUROPEAN PATENT APPLICATION

(11) **EP 4 640 493 A1**
(43) Date of publication of application: **29.10.2025**
(21) Application number: 25171861.5
(22) Date of filing: 23.04.2025
(51) Int. Cl.: B60R 16/03, B60R 16/033, B60L 1/02, B60L 50/64, B60L 58/18, B60L 58/27, H01M 10/44

(54) **COLD START SYSTEM, COLD START METHOD AND ELECTRIC VEHICLE**

(30) Priority: 26.04.2024 CN 202420895355 U
(71) Applicant: Eve Energy Co., Ltd., Huizhou, Guangdong 516006 (CN)
(72) Inventor: KANG, Zhenhua, Huizhou, Guangdong, 516006 (CN); LING, Xinchen, Huizhou, Guangdong, 516006 (CN); WAN, Liping, Huizhou, Guangdong, 516006 (CN)
(74) Representative: Herrero & Asociados, S.L.

(57) **Abstract**

The present disclosure provides a cold start system (100), a method and an electric vehicle (10), wherein the cold start system (100) includes a main energy supply module (110), a conversion module (120), a pulse module (130) and a starting energy supply module (140). The main energy supply module (110) is configured to provide a first electrical signal; the conversion module (120) is electrically connected to the main energy supply module (110) and configured to convert the first electrical signal into a second electrical signal, wherein the voltage value of the second electrical signal is less than the voltage value of the first electrical signal; the pulse module (130) is electrically connected to the conversion module (120) and configured to convert the second electrical signal into a pulse signal; the starting energy supply module (140) is electrically connected to the pulse module (130) and configured to receive the pulse signal to operate in response to the pulse signal. The cold start system (100) of the present disclosure can greatly improve the cold start capability of the starting energy supply module (140).

## Description

### TECHNICAL FIELD

The present disclosure relates to the field of battery technologies, and in particular to a cold start system, a cold start method and an electric vehicle.

### BACKGROUND

In cold weather or low temperature environments, due to the drop in temperature, the internal resistance of the low-voltage battery in the electric vehicle increases, and the cold starting power of the 12V starting power supply drops sharply, which may cause the electric vehicle to fail to start.

In related solutions, a heating film is used to heat the low-voltage battery. Since the heating speed of the heating film is very slow and it consumes the power of the 12V starting power supply, it will further reduce the cold start capability of the 12V starting power supply.

### SUMMARY

In a first aspect, the present application provides a cold start system, including:
a main energy supply module, which is configured to provide a first electrical signal;
a conversion module, which is electrically connected to the main energy supply module, the conversion module being configured to convert the first electrical signal into a second electrical signal, wherein a voltage value of the second electrical signal is smaller than a voltage value of the first electrical signal;
a pulse module, which is electrically connected to the conversion module, and the pulse module is configured to convert the second electrical signal into a pulse signal;
a starting energy supply module, which is electrically connected to the pulse module, and the starting energy supply module is configured to receive the pulse signal to operate in response to the pulse signal.

In a second aspect, the present disclosure also provides an electric vehicle, including the cold start system as described above.

In a third aspect, the present disclosure further provides a cold start method, including: providing a first electrical signal via a main energy supply module;
converting the first electrical signal into a second electrical signal via a conversion module, wherein a voltage value of the second electrical signal is smaller than a voltage value of the first electrical signal;
converting the second electrical signal into a pulse signal by a pulse module;
receiving the pulse signal by the starting energy supply module, so that the starting energy supply module is configured to operate in response to the pulse signal.

The cold start system, the cold start method and the electric vehicle provided by the present disclosure have the following beneficial effects:
The conversion module can convert the high-voltage first electrical signal provided by the main energy supply module into a low-voltage second electrical signal that can adapt to the starting energy supply module. The pulse module can convert the second electrical signal into a pulse signal and charge the starting energy supply module. Since the pulse signal has a large current, the large-current pulse signal can not only quickly charge the starting energy supply module and increase the SOC value of the starting energy supply module, but also increase the temperature of the starting energy supply module in a short time, which can greatly improve the cold start capability of the starting energy supply module.

Furthermore, the cold start system of the present disclosure can utilize the main energy supply module of the high-voltage power battery module of the electric vehicle to charge the starting energy supply module. The cold start system does not need to rely on an external power supply, which can greatly improve the applicability of the cold start system.

### BRIEF DESCRIPTION OF THE DRAWINGS

FIG. 1 is a first structural diagram of a cold start system provided by the present disclosure;
FIG. 2 is a schematic diagram showing a comparison of cold start capabilities of the cold start system provided by the present disclosure and a heating film heating solution of related technologies;
FIG. 3 is a structural diagram of a pulse module provided by the present disclosure;
FIG. 4 is a schematic diagram of several waveforms of pulse signals formed by the pulse module provided by the present disclosure;
FIG. 5 is a second structural diagram of the cold start system provided by the present disclosure;
FIG. 6 is a first structural diagram of an electric vehicle provided by the present disclosure;
FIG. 7 is a second structural diagram of an electric vehicle provided by the present disclosure;

### Reference numerals in the drawings:

10, Electric vehicle; 100, Cold start system; 200, Starting device; 300, Power device; 110, Main energy supply module; 120, Conversion module; 130, Pulse module; 140, Starting energy supply module; 150, Power distribution module; 131, Switch control module; 132, Rectifier and filter module; 133, Current limiting module.

### DETAILED DESCRIPTION

When an ambient temperature is too low, electric vehicles may fail to start. This is mainly because the temperature drops, the internal resistance of the 12V starting power supply in the electric vehicle increases, and the power of the 12V starting power supply drops sharply during cold start (the cold start of the vehicle refers to starting the power supply directly without preheating), making it impossible to run.

One solution of related technologies is to use a heating film to heat the 12V starting power supply to improve its cold starting capability. However, the heating speed of the heating film is very slow and it needs to consume the power of the 12V starting power supply, which will further reduce its cold starting capability.

Another solution of related technologies is to improve the remaining power (State of Charge, SOC) of the 12V starting power supply by DC charging the 12V starting power supply, so as to improve the cold starting ability of the battery. However, in order to prevent the 12V starting power supply from lithium plating (lithium plating is a loss condition of lithium-ion batteries, which occurs during the charging process. When lithium ions are released from the positive electrode and move to the negative electrode, if the negative electrode has insufficient lithium insertion space, or the resistance of lithium ions to embedding into the negative electrode is too great, or lithium ions are released from the positive electrode too quickly and cannot be embedded into the negative electrode in equal amounts, these lithium ions that cannot be embedded into the negative electrode will obtain electrons on the surface of the negative electrode to form metallic lithium, which is called lithium plating), the charging current of the 12V starting power supply at low temperatures is very small, and it takes a long time to increase the battery's SOC and improve the cold starting ability.

The present disclosure provides a cold start system 100, which can quickly and safely improve the cold start capability of a 12V starting power supply through a pulse signal.

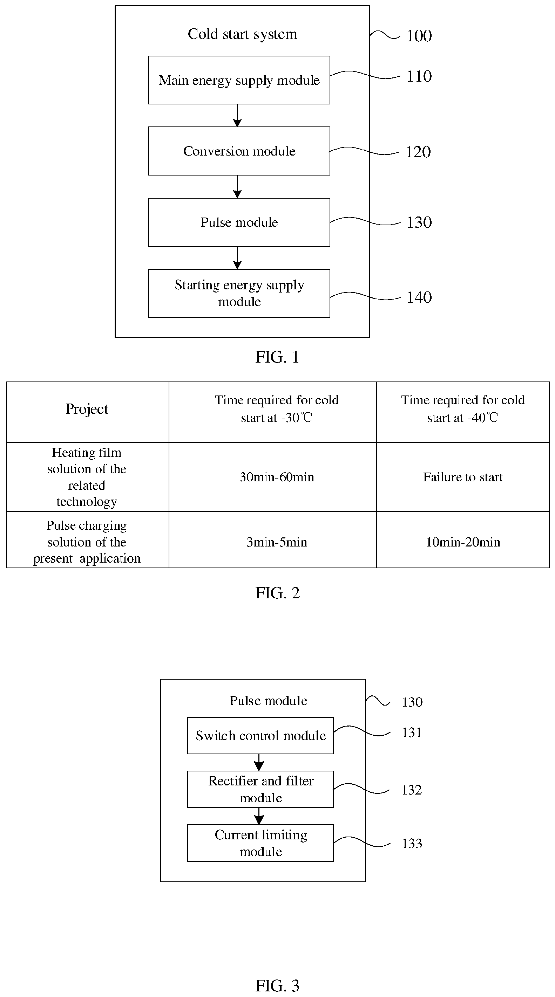

Referring to FIG. 1, which is a structural diagram of a cold start system 100 provided in the present disclosure. The cold start system 100 includes a main energy supply module 110, a conversion module 120, a pulse module 130 and a starting energy supply module 140.

The main energy supply module 110 is configured to provide a first electrical signal. The conversion module 120 is electrically connected to the main energy supply module 110, and the conversion module 120 is configured to convert the first electrical signal into a second electrical signal, voltage value of the second electrical signal is less than voltage value of the first electrical signal, and the second electrical signal may be a low-voltage DC signal. The pulse module 130 is electrically connected to the conversion module 120, and the pulse module 130 is configured to convert the second electrical signal into a pulse signal. The starting energy supply module 140 is electrically connected to the pulse module 130, and the starting energy supply module 140 is configured to receive the pulse signal output by the pulse module 130 and operate in response to the pulse signal. In some implementations, the operation here mainly refers to a state in which the starting energy supply module 140 can output power under a specific power condition.

It is appreciated that the first electrical signal provided by the main energy supply module 110 may be a high-voltage DC signal, and the main energy supply module 110 may be, but is not limited to, a high-voltage power battery module. The second electrical signal converted by the conversion module 120 may be a low-voltage DC signal, and the conversion module 120 may be a DC-DC converter.

The voltage value of the second electrical signal may be within input voltage range required by the starting energy supply module 140, and the conversion module 120 may convert the high-voltage signal provided by the main energy supply module 110 into the low-voltage signal required by the starting energy supply module 140. For example, in some implementations, the main energy supply module 110 may provide a high-voltage signal of 400 volts (V) to 800 V (e.g., 400 V, 600 V, or 800 V), the starting energy supply module 140 may be a 12V starting power supply, and the DC-DC converter may convert the high-voltage signal of 400 V to 800 V into a low-voltage signal of 9 V to 16 V (e.g., 9 V, 10 V, 12 V, 14 V, or 16 V), so that the main energy supply module 110 can provide energy for the 12V starting power supply (i.e., the starting energy supply module 140) and charge the 12V starting power supply (i.e., the starting energy supply module 140).

It is appreciated that the pulse signal provided by the pulse module 130 is a discrete signal, and the pulse signal is continuously emitted at a certain time interval with a certain voltage amplitude. The time interval between two adjacent pulse signals is called a period; the number of pulses generated within a unit time (such as 1 second) is called a frequency.

In the embodiment of the present disclosure, the pulse module 130 converts low-voltage direct current into a pulse signal. Due to the periodic characteristics of the pulse signal, the pulse module 130 can provide a pulse signal in the form of a large current to supply power to the starting energy supply module 140. Therefore, the pulse module 130 can charge the starting energy supply module 140 in a short period time and increase the temperature of the starting energy supply module 140 in a short period time, thereby greatly improving the cold start performance of the starting energy supply module 140.

It is appreciated that the starting energy supply module 140 is the main module for cold starting of the electric vehicle 10. At low temperatures, due to the relatively large internal resistance of the starting energy supply module 140, the output of a specific power condition cannot be achieved, so that the starting energy supply module 140 cannot be started. In the low-temperature pulse charging solution of the embodiment of the present disclosure the temperature of the starting energy supply module 140 can be increased in a short period time, and its temperature rise rate is 5 to 10 times (for example, 5 times, 6 times, 7 times, 8 times, 9 times or 10 times) the temperature rise rate in the heating film heating solution. Moreover, the low-temperature pulse charging solution of the present disclosure can also quickly increase the SOC of the starting energy supply module 140.

For example, refer to FIG. 2, which is a schematic diagram comparing the cold start capability of the cold start system 100 provided by the present disclosure with the heating film heating method of related technologies. As shown in FIG. 2, in a solution that the cold start system 100 of the present disclosure utilizes a pulse signal to power the starting energy supply module 140, the time required for the cold start of the starting energy supply module 140 at -30°C is about 3 to 5 minutes (for example, 3 minutes, 4 minutes or 5 minutes), and the time required for the cold start of the starting energy supply module 140 at -40°C is about 10 to 20 minutes (for example, 10 minutes, 15 minutes or 20 minutes). However, the heating film heating solution of related technologies requires about 30 to 60 minutes (for example, 30 minutes, 40 minutes, 50 minutes or 60 minutes) to cold start the starting energy supply module 140 at -30°C, and the starting energy supply module 140 basically cannot be started at -40°C. By comparing the two solutions, it can be clearly seen that in the present disclosure the cold start capability of the starting energy supply module 140 can be greatly improved by charging the starting energy supply module 140 with a pulse signal.

It is appreciated that in some implementations, the main energy supply module 110, the conversion module 120 and the starting energy supply module 140 of the present disclosure can all be structures of the electric vehicle 10. The cold start system 100 is applied to the electric vehicle 10, and the cold start system 100 of the present disclosure can reuse the main energy supply module 110, the conversion module 120 and the starting energy supply module 140 of the electric vehicle 10. Among them, the main energy supply module 110, as a high-voltage power battery module, can provide energy for power devices such as the motor and engine of the electric vehicle 10 (such as power device 300 described later), and can also charge the starting energy supply module 140 of the cold start system 100. The conversion module 120 converts the high-voltage signal provided by the main energy supply module 110 into a low-voltage signal, which can provide energy for other modules of the electric vehicle 10, and can also provide energy for the starting energy supply module 140 of the cold start system 100. The starting energy supply module 140 can supply power to a low-voltage starting system of the electric vehicle 10, and can also, as a component of the cold starting system 100, be charged by the main energy supply module 110.

In the cold start system 100 of the embodiment of the present disclosure, the conversion module 120 can convert the high-voltage first signal provided by the main energy supply module 110 into a low-voltage second electrical signal that can adapt to the starting energy supply module 140, and the pulse module 130 can convert the second electrical signal into a pulse signal and charge the starting energy supply module 140. Since the pulse signal can have a large current, the large-current pulse signal can not only quickly charge the starting energy supply module 140 and increase the SOC value of the starting energy supply module 140, but also increase the temperature of the starting energy supply module 140 in a short time, which can greatly improve the cold start capability of the starting energy supply module 140. In addition, the cold start system 100 of the present disclosure is capable of utilizing the main energy supply module 110 of the high-voltage power battery module of the electric vehicle 10 to charge the starting energy supply module 140, so that the cold start system 100 does not need to rely on an external power supply, which greatly improves the applicability of the cold start system 100.

In particular, refer to FIG. 3 in conjunction with FIG. 1. FIG. 3 is a structural diagram of a pulse module 130 provided in the present disclosure. The pulse module 130 includes a switch control module 131, a rectifier and filter module 132, and a current limiting module 133.

The switch control module 131 is electrically connected to the conversion module 120, and the switch control module 131 is configured to switch between an open state and a closed state to convert the second electrical signal into a pulse signal. The rectifier and filter module 132 is electrically connected to the switch control module 131, and the rectifier and filter module 132 is configured to tune a waveform of the pulse signal. The current limiting module 133 is electrically connected to the rectifier and filter module 132, and the current limiting module 133 is configured to control a current parameter of the pulse signal so that a current voltage of the starting energy supply module 140 is less than or equal to the upper limit of voltage.

It is appreciated that the switch control module 131 is electrically connected to the conversion module 120 and receives the second electrical signal output by the conversion module 120. The switch control module 131 includes a switch circuit and a control circuit, and the control circuit is connected to the switch circuit and the conversion module respectively. The control circuit can control the opening and closing of the switch circuit to convert the second electrical signal into a pulse signal; and the control circuit can affect the frequency of the pulse signal by controlling the frequency of the opening and closing of the switch circuit. In some implementations, the switch control module 131 can control the frequency of the pulse signal to be between 100 Hz (HZ) and 1500 Hz. Further, the frequency of the pulse signal can be controlled to be between 300 Hz and 900 Hz. For example, the switch control module 131 can control the frequency of the pulse signal to be 100 Hz, 300 Hz, 500 Hz, 700 Hz or 900 Hz.

The switch control module 131 of the embodiment of the present disclosure controls the frequency of the pulse signal, and the pulse module 130 can form a continuous high-frequency pulse current, which can not only quickly charge the starting energy supply module 140, but also avoid lithium deposition when the starting energy supply module 140 is charged at low temperatures.

It is appreciated that the control circuit can also control the interval between the opening and closing of the switch circuit to control the duty cycle of the pulse signal. The duty cycle of the pulse signal refers to the ratio of the closing duration (also the conduction duration) of the switch circuit to the total cycle (one pulse cycle). In some embodiments, the switch control module 131 can control the duty cycle of the pulse signal to be between 1:5 and 1:1. For example, the switch control module 131 can control the duty cycle of the pulse signal to be 1:1, 1:2, 1:3, 1:4 or 1:5. In the embodiment of the present disclosure, the switch control module 131 controls the duty cycle of the pulse signal, and the pulse module 130 is more likely to form a continuous high-frequency pulse current.

It is appreciated that the rectifier and filter module 132 may be, but is not limited to, a rectifier/filter module, and the rectifier and filter module 132 may adjust the waveform of the pulse signal. The rectifier and filter module 132 may fine-tune a specific waveform (e.g., the amplitude of the waveform). For example, when the pulse signal output by the pulse module 130 is a sinusoidal wave pulse signal, the rectifier and filter module 132 may adjust the pulse amplitude of the sinusoidal wave pulse signal.

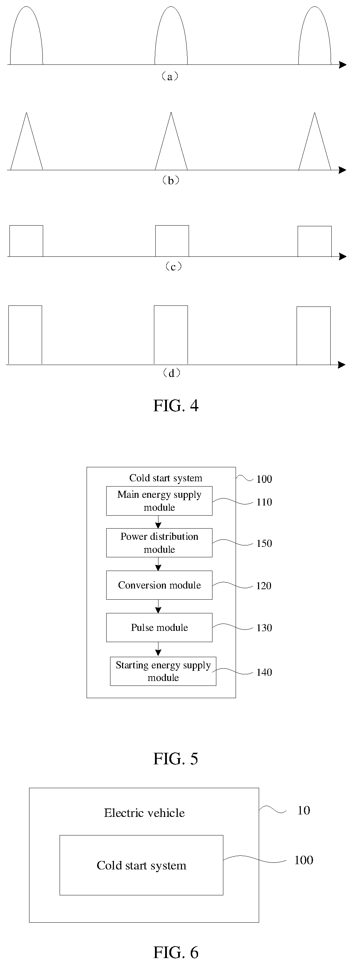

Among them, the rectifier and filter module 132 can also integrate waveform conversion circuits such as an amplification unit and a differential operation unit, so that the rectifier and filter module 132 can also adjust the waveform of the pulse signal. For example, in some implementations, refer to FIG. 4, which is a schematic diagram of several waveforms of the pulse signal formed by the pulse module 130 provided in the embodiment of the present disclosure. As shown in FIG. (a) of FIG. 4, the rectifier and filter module 132 adjusts the pulse signal into a sinusoidal wave pulse signal under the action of the waveform conversion circuit; or, as shown in FIG. (b) of FIG. 4, the rectifier and filter module 132 adjusts the pulse signal into a triangular wave pulse signal under the action of the waveform conversion circuit; or, as shown in FIG. (c) of FIG. 4, the rectifier and filter module 132 adjusts the pulse signal into a square wave pulse signal under the action of the waveform conversion circuit; or, as shown in FIG. (d) of FIG. 4, the rectifier and filter module 132 adjusts the pulse signal into a rectangular pulse signal under the action of the waveform conversion circuit. When the pulse signal is a sinusoidal wave pulse signal, the current value of the pulse signal can change slowly, and the current of the pulse signal is easier to control. When the pulse signal is a triangular wave pulse signal, the pulse signal can rise to the highest point in a very short time, greatly improving the efficiency of the pulse signal in supplying power to the starting energy supply module 140. When the pulse signal is a square wave pulse signal or a rectangular pulse signal, the amplitude of the pulse signal remains constant throughout the entire cycle, the waveform is stable, and the pulse signal charges the starting energy supply module 140 in a more stable way.

Among them, in some implementations, when the power of the starting energy supply module 140 is relatively low (for example, the SOC of the starting energy supply module 140 is less than or equal to 30%) and can be in a charging state, the rectifier and filter module 132 can also filter a reverse-directed discharge pulse current signal during the charging state of the starting energy supply module 140. For example, the several pulse signals shown in FIG. 4 are all pulse signals after filtering the reverse-directed discharge pulse current signal.

It is appreciated that when the control circuit controls the switch circuit to be disconnected, the pulse module 130 does not charge the starting energy supply module 140. At this time, the starting energy supply module 140 may discharge in reverse under the action of the disconnected switch circuit and generate a discharge pulse current signal. The rectifier and filter module 132 of the embodiment of the present disclosure filters out the reverse-directed discharge pulse current signal, which can prevent the starting energy supply module 140 from discharging and causing its SOC to decrease.

Among them, in some other implementations, the rectifier and filter module 132 can also filter the forward-directed charging pulse current signal when the starting energy supply module 140 is in a fully charged state (at this time, the waveform of the pulse signal can be opposite to the waveform shown in FIG. 4). It is appreciated that some starting energy supply modules 140 cannot be started in low temperature or extremely low temperature scenarios even though they are in a fully charged state (the SOC of the starting energy supply module 140 is 100%). In the embodiment of the present disclosure, the pulse module 130, under the action of the rectifier and filter module 132, can filter out the forward-directed charging pulse signal and make the starting energy supply module 140 generate a reverse-directed discharge pulse signal. In this process, the reverse-directed discharge pulse signal will heat the starting energy supply module 140, which can improve the cold start capability of the starting energy supply module 140.

It is appreciated that the current limiting module 133 may include, but is not limited to, components such as resistors, diodes, triodes, and mutual inductors. The current limiting module 133 is configured to control the current parameters of the pulse signal to prevent the current voltage of the starting energy supply module 140 from exceeding upper limit of its charging voltage. In addition, when the current voltage of the starting energy supply module 140 is less than upper limit of its charging voltage, the current limiting module 133 may also make the current rate of the starting energy supply module 140 between 3C and 10C. For example, the current rate of the starting energy supply module 140 may be 3C, 4C, 5C, 6C, 7C, 8C, 9C, and 10C. In the solution of charging the starting energy supply module 140 by direct current in related technologies, in order to prevent lithium precipitation, the current rate of the current is generally limited to less than 0.1C, and the current is relatively small, which makes the direct current charging rate too slow. The present disclosure charges the starting energy supply module 140 through a pulse signal, and the current rate of the starting energy supply module 140 can be as high as 3C to 10C, and further can be as high as 5C to 10C. For example, the current rate of the starting energy supply module 140 can be 5C, 6C, 7C, 8C, 9C, 10C. The solution of the embodiment of the present disclosure can greatly improve the charging rate, increase the temperature of the starting energy supply module 140, and improve the low-temperature cold start capability of the starting energy supply module 140. As the SOC of the starting energy supply module 140 increases, the charging current of the pulse signal needs to be reduced to prevent the current voltage of the starting energy supply module 140 from exceeding the upper limit of charging voltage of the starting energy supply module 140.

The pulse module 130 of the embodiment of the present disclosure can limit the frequency, duty cycle, waveform, current value and other parameters of the pulse signal through the mutual cooperation of the switch control module 131, the rectifier and filter module 132, and the current limiting module 133, so that the pulse signal can better charge and heat the starting energy supply module 140, greatly improving the cold start capability of the starting energy supply module 140.

Refer to FIG. 5, which is a second structural diagram of the cold start system 100 provided in the present disclosure. The cold start system 100 further includes a power distribution module 150.

The power distribution module 150 is electrically connected between the main energy supply module 110 and the conversion module 120. The power distribution module 150 is configured to distribute the electrical signal provided by the main energy supply module 110 to the conversion module 120. In some implementations, the power distribution module 150 may be a high-voltage distribution box, and the power distribution module 150 may be responsible for the power distribution and management of the main energy supply module 110. Through the high-voltage distribution box, the power of the main energy supply module 110 can be output to the conversion module 120.

It is appreciated that the power distribution module 150 can distribute a portion of the electric energy of the main energy supply module 110 to the conversion module 120 to form a pulse signal and charge the starting energy supply module 140. In other implementations, the power distribution module 150 can also distribute other electric energy of the main energy supply module 110 to other modules, for example, to the power device 300 such as the generator and motor of the electric vehicle 10.

It is appreciated that the power distribution module 150 can be an existing component in the electric vehicle 10, that is, the cold start system 100 of the present disclosure can reuse the existing components in the electric vehicle 10, so that the structure of the cold start system 100 is simpler and the production cost is also simpler.

The cold start system 100 of the embodiment of the present disclosure includes a power distribution module 150, which can manage and distribute the electric energy of the main energy supply module 110 to meet the power requirements of different modules.

Based on the structure of the above-mentioned cold start system 100, the cold start system 100 of the embodiment of the present disclosure can solve the bottleneck of low-voltage batteries such as 12V starting power supplies in low temperature conditions, and can further promote the development of new energy vehicles. Compared with the heating film heating solution and DC charging solution of related technologies, the cold start system 100 of the present disclosure adopts a pulse charging method, which can increase the charging current of the 12V starting power supply 11(i.e., the starting energy supply module 140) at low temperatures by more than dozens of times, and then can quickly increase the temperature and SOC of the 12V starting power supply, thereby improving the cold start capability of the 12V starting power supply. In addition, the cold start system 100 of the present disclosure is capable of utilizing the main energy supply module 110 of the high-voltage power battery module of the electric vehicle 10 to charge the starting energy supply module 140, so that the cold start system 100 does not need to rely on an external power supply, which greatly improves the applicability of the cold start system 100.

Accordingly, an embodiment of the present disclosure further provides a cold start method, which is applied to the above cold start system. The cold start method includes: providing a first electrical signal through a main energy supply module;
converting the first electrical signal into a second electrical signal through a conversion module, wherein a voltage value of the second electrical signal is smaller than a voltage value of the first electrical signal;
converting the second electrical signal into a pulse signal through a pulse module;
receiving the pulse signal through a starting energy supply module so that the starting energy supply module is configured to operate in response to the pulse signal.

In some implementations, the cold start method of the embodiment of the present disclosure further includes:
converting the second electrical signal into a pulse signal through switching of a switch control module between an open state and a closed state;
adjusting the waveform of the pulse signal through the rectifier and filter module;
controlling the current parameter of the pulse signal through the current limiting module so that the voltage of the starting energy supply module is less than or equal to the upper limit of voltage.

Based on the above-mentioned cold start system 100, refer to FIG. 6, which is a first structural diagram of the electric vehicle 10 provided in the embodiment of the present disclosure. The embodiment of the present disclosure also provides an electric vehicle 10, including the cold start system 100 of any of the above-mentioned embodiments. The cold start system 100 can convert the high-voltage signal provided by the main energy supply module 110 into a low-voltage signal through the conversion module 120 and convert the low-voltage signal into a pulse signal through the pulse module 130, and finally charge the starting energy supply module 140 through the pulse signal to improve the cold start capability of the starting energy supply module 140.

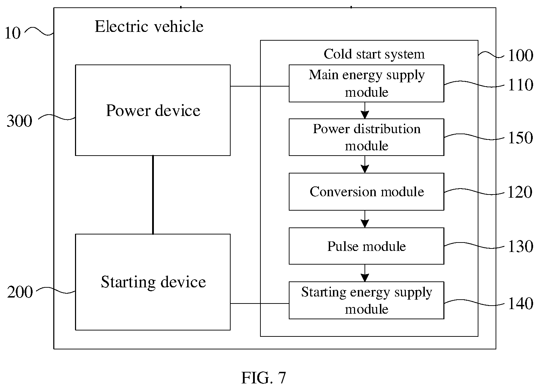

Refer to FIG. 7, which is a second structural diagram of the electric vehicle 10 provided in the embodiment of the present disclosure. In addition to the cold start system 100, the electric vehicle 10 may further include a starting device 200 and a power device 300.

The starting device 200 is electrically connected to the starting energy supply module 140, and the starting device 200 is configured to operate under the action of the electric energy provided by the starting energy supply module 140. Among them, the starting device 200 can be the in-vehicle electronic system of the electric vehicle 10, including at least one of an in-vehicle entertainment system, a lighting system, and an instrument panel system. The starting energy supply module 140, such as a 12V starting power supply, can provide electric energy for systems such as the in-vehicle entertainment system, the lighting system, and the instrument panel system. Among them, the starting device 200 also includes the starting system of the power device 300. The main energy supply module 110 (i.e., the power battery) of the new energy vehicle will not directly act on the power device 300 for vehicle starting. It is often powered by the starting energy supply module 140 to supply power to the starting system of the power device 300, and then the main energy supply module 110 acts on the power device 300 to start the engine or activate the motor.

The power device 300 is electrically connected to at least one of the main energy supply module 110 and the power distribution module 150.

The power device 300 provides power for the electric vehicle 10 under the action of the main energy supply module 110. The power device 300 may be an engine or an electric motor of the electric vehicle 10. In some implementations, the main energy supply module 110 may be directly electrically connected to the power device 300 and supply power to the power device 300. In other implementations, the power device 300 may also be electrically connected to the power distribution module 150, and the power distribution module 150 may reasonably distribute the electric energy of the main energy supply module 110 to the power device 300. In yet other implementations, the power device 300 may be electrically connected to both the main energy supply module 110 and the power distribution module 150. The embodiments of the present disclosure do not limit this.

It is appreciated that the main energy supply module 110, the power distribution module 150, the conversion module 120 and the starting energy supply module 140 of the present disclosure can be structures of the electric vehicle 10. The main energy supply module 110, as a high-voltage power battery module, can provide energy for the power device 300 such as the motor and engine of the electric vehicle 10, and can also charge the starting energy supply module 140 of the cold start system 100. The power distribution module 150 can distribute the electric energy of the main energy supply module 110 to the conversion module 120 and be configured to realize the cold start function of the starting energy supply module 140, and the power distribution module 150 can also distribute the electric energy of the main energy supply module 110 to the power device 300 to realize the starting of the electric vehicle 10. The conversion module 120 converts the high-voltage signal provided by the main energy supply module 110 into a low-voltage signal, which can provide energy for other modules of the electric vehicle 10, and can also provide energy for the starting energy supply module 140 of the cold start system 100. The starting energy supply module 140 can function as a low-voltage starting system of the electric vehicle, and can also be a component of the cold starting system 100 to be charged by the main energy supply module 110.

It should be noted that the above is only an exemplary description of the electric vehicle 10 provided in the embodiment of the present disclosure, and the electric vehicle 10 may also include other components, such as but not limited to a frame, tires, a dashboard, a steering wheel, a main control system, etc. This disclosure will not elaborate on them here.

The electric vehicle 10 of the embodiment of the present disclosure is capable of utilizing the main energy supply module 110 of the high-voltage power battery module of the electric vehicle 10 to pulse charge the starting energy supply module 140, which can quickly improve the cold start capability of the starting energy supply module 140 and realize the cold start of the electric vehicle 10 at low temperatures. In addition, compared with the heating film solution, the solution of the present disclosure is safer. At the same time, the cold start system 100 of the present disclosure does not need to rely on an external power supply, which greatly improves the applicability of the cold start system 100 and makes the run of the electric vehicle smoother.

It should be understood that, in the description of this disclosure, terms such as "first", "second", etc. are only used to distinguish similar objects, and cannot be understood as indicating or implying relative importance or implicitly indicating the number of the indicated technical features.

## Claims

1. A cold start system (100), **characterized by** comprising:
a main energy supply module (110), configured to provide a first electrical signal;
a conversion module (120), electrically connected to the main energy supply module (110), wherein the conversion module (120) is configured to convert the first electrical signal into a second electrical signal, wherein a voltage value of the second electrical signal is smaller than a voltage value of the first electrical signal;
a pulse module (130), electrically connected to the conversion module (120), and the pulse module (130) being configured to convert the second electrical signal into a pulse signal;
a starting energy supply module (140), electrically connected to the pulse module (130), wherein the starting energy supply module (140) is configured to receive the pulse signal in order to operate in response to the pulse signal.

2. The cold start system (100) according to claim 1, **characterized in that** the pulse module (130) comprises:
a switch control module (131), electrically connected to the conversion module (120), wherein the switch control module (131) is configured to switch between an open state and a closed state to convert the second electrical signal into the pulse signal;
a rectifier and filter module (132), electrically connected to the switch control module (131), wherein the rectifier and filter module (132) is configured to adjust a waveform of the pulse signal; and
a current limiting module (133), electrically connected to the rectifier and filter module (132), wherein the current limiting module (133) is configured to control a current parameter of the pulse signal so that a voltage of the starting energy supply module (140) is less than or equal to an upper limit of voltage.

3. The cold start system (100) according to claim 2, **characterized in that** the switch control module (131) comprises a switch circuit and a control circuit, wherein the control circuit is connected to the switch circuit and the conversion module (120) respectively;
wherein, the control circuit is configured to control opening and closing of the switch circuit to convert the second electrical signal into the pulse signal.

4. The cold start system (100) according to claim 3, **characterized in that** the control circuit is further configured to control a frequency of opening and closing of the switch circuit.

5. The cold start system (100) according to claim 3 or 4, **characterized in that** the control circuit is further configured to control an interval between the opening and closing of the switch circuit to control a duty cycle of the pulse signal.

6. The cold start system (100) according to any of claims 2 to 5, **characterized in that** the switch control module (131) is configured to control a frequency of the pulse signal to be between 100 Hz and 1500 Hz.

7. The cold start system (100) according to any of claims 2 to 5, **characterized in that** the switch control module (131) is configured to control the frequency of the pulse signal to be between 300 Hz and 900 Hz.

8. The cold start system (100) according to any of claims 2 to 5, **characterized in that** the switch control module (131) is configured to control the duty cycle of the pulse signal to be between 1:5 and 1:1.

9. The cold start system (100) according to any of claims 2 to 8, **characterized in that** the rectifier and filter module (132) is configured to adjust the pulse signal into a sinusoidal wave pulse signal, a triangular wave pulse signal, a square wave pulse signal, or a rectangular pulse signal.

10. The cold start system (100) according to any of claims 2 to 9, **characterized in that** the rectifier and filter module (132) is configured to filter a reverse-directed discharge pulse current signal when the starting energy supply module (140) is in a charging state, wherein, the reverse-directed discharge pulse current signal is generated by the starting energy supply module (140) due to reverse discharge when the switch circuit is closed;
wherein, the rectifier and filter module (132) is also configured to filter a forward-directed charging pulse current signal when the starting energy supply module (140) is in a fully charged state.

11. The cold start system (100) according to any of claims 2 to 9, **characterized in that** the current limiting module (133) is configured to control the current parameter of the pulse signal so that the current rate of the starting energy supply module (140) is between 3C and 10C.

12. The cold start system (100) according to any of claims 1 to 11, **characterized in that** the cold start system (100) further comprises:
a power distribution module (150), wherein the power distribution module (150) is electrically connected between the main energy supply module (110) and the conversion module (120), wherein the power distribution module (150) is configured to distribute an electrical signal provided by the main energy supply module (110) to the conversion module (120).

13. An electric vehicle (10), **characterized by** comprising the cold start system (100) according to any of claims 1 to 12;
wherein, the electric vehicle (10) further comprises:
a starting device (200), electrically connected to the starting energy supply module (140), wherein the starting device (200) is configured to operate under the action of an electrical signal provided by the starting energy supply module (140); and
a power device (300), electrically connected to the main energy supply module (110), wherein the power device (300) is configured to provide power for the electric vehicle (10) under the action of the main energy supply module (110).

14. A cold start method, **characterized in that** the cold start method is applied to the cold start system (100) according to any of claims 1 to 12, wherein, the cold start method comprises:
providing a first electrical signal through a main energy supply module;
converting the first electrical signal into a second electrical signal through a conversion module (120), wherein a voltage value of the second electrical signal is smaller than a voltage value of the first electrical signal;
converting the second electrical signal into a pulse signal through a pulse module (130);
receiving the pulse signal through a starting energy supply module (140) so that the starting energy supply module (140) is configured to operate in response to the pulse signal.

15. The cold start method according to claim 14, **characterized in that** the method further comprises:
converting the second electrical signal into a pulse signal through switching of a switch control module between an open state and a closed state;
adjusting the waveform of the pulse signal through a rectifier and filter module (132);
controlling the current parameter of the pulse signal through the current limiting module (133) so that the voltage of the starting energy supply module (140) is less than or equal to the upper limit of voltage.
